# EUROPEAN PATENT APPLICATION

(11) **EP 4 712 633 A1**
(43) Date of publication of application: **18.03.2026**
(21) Application number: 24818542.3
(22) Date of filing: 29.05.2024
(51) Int. Cl.: H04W 72/0453

(54) **COMMUNICATION METHOD AND COMMUNICATION APPARATUS**

(30) Priority: 05.06.2023 CN 202310658271
(71) Applicant: Huawei Technologies Co., Ltd., Shenzhen, Guangdong 518129 (CN)
(72) Inventor: HU, Mengshi, Shenzhen, Guangdong 518129 (CN); GONG, Bo, Shenzhen, Guangdong 518129 (CN); GAN, Ming, Shenzhen, Guangdong 518129 (CN); YU, Jian, Shenzhen, Guangdong 518129 (CN)
(74) Representative: Goddar, Heinz J.
(86) International application number: PCT/CN2024/096152
(87) International publication number: WO 2024/251009

(57) **Abstract**

This application provides a communication method and a communication apparatus. The method includes: generating a PPDU; and transmitting the PPDU on a channel corresponding to a first bandwidth. X subcarriers in Y subcarriers corresponding to the first bandwidth are used to carry data corresponding to X data subcarriers of at least one RU and/or at least one MRU, the X subcarriers are subcarriers other than K pilot subcarriers in the Y subcarriers, the Y subcarriers further include M pilot subcarriers, and the M pilot subcarriers are subcarriers other than the X subcarriers and the K pilot subcarriers in the Y subcarriers. The method is designed for "increasing a quantity of pilot subcarriers", and the quantity of pilot subcarriers is extended from K to K+M. In other words, the M pilot subcarriers are added. This helps resist impact of a larger CFO and phase noise of a high frequency, improve robustness of low-frequency transmission, and improve communication quality.

## Description

### CROSS-REFERENCE TO RELATED APPLICATIONS

This application claims priority to Chinese Patent Application No. 202310658271.5, filed with the China National Intellectual Property Administration on June 5, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A wireless local area network (wireless local area network, WLAN) has developed for many generations to date, including standards below 7 gigahertz (GHz) (Sub-7 GHz), such as 802.11a/b/g, 802.11n, 802.11ac, 802.11ax, and 802.11be, and further including high-frequency standards (standards of 45 GHz and above), such as 802.11ad and 802.11ay standards operating near 60 GHz.

In high-frequency communication of the WLAN, although transmission in an orthogonal frequency division multiplexing (orthogonal frequency division multiplexing, OFDM) format is supported, the transmission exists only in a field of a latter part of a physical layer protocol data unit (PHY protocol data unit, PPDU). Further, the transmission in the OFDM format is not performed at the beginning of the PPDU, but is performed after a preamble including a plurality of fields modulated based on a single carrier (single subcarrier).

The manner in which single-carrier transmission is performed first and then OFDM transmission is performed in a PPDU at a conventional high frequency of the WLAN has some disadvantages, for example, non-unified modulation schemes in the PPDU and incompatibility with a low-frequency PPDU format. Therefore, currently, it is proposed that an "upclocking (upclocking) " version based on a low-frequency PPDU may be directly used as a high-frequency PPDU for transmission. Upclocking is to shorten an interval between sending points. When a quantity of sending points remains unchanged, a period corresponding to a same quantity of sending points is shortened. Because the period is in a reciprocal relationship with a subcarrier spacing, the subcarrier spacing is increased. In other words, an OFDM transmission scheme similar to that of a low frequency may be used, and a larger subcarrier spacing may be used compared with that in the low frequency. A manner of increasing the subcarrier spacing is used because a larger subcarrier spacing helps resist impact such as a larger carrier frequency offset (carrier frequency offset, CFO) and phase noise of the high frequency.

However, when a low-frequency OFDM format PPDU of an "increased subcarrier spacing" version is used for high-frequency transmission, impact caused by a CFO, a phase noise, and the like still exists. How to reduce the impact is an urgent problem that needs to be resolved.

### SUMMARY

Embodiments of this application provide a communication method and a communication apparatus, to improve communication quality.

According to a first aspect, an embodiment of this application provides a communication method. The method may be performed by a first device or a module (like a chip) used in the first device, and the first device may be a terminal device or a network device. The method includes: generating a PPDU; and transmitting the PPDU on a channel corresponding to a first bandwidth, where X subcarriers in Y subcarriers corresponding to the first bandwidth are used to carry data corresponding to X data subcarriers of at least one resource unit (resource unit, RU) and/or at least one multi-resource unit (multi-resource unit, MRU), the X subcarriers are subcarriers other than K pilot subcarriers in the Y subcarriers, the Y subcarriers further include M pilot subcarriers, the M pilot subcarriers are subcarriers other than the X subcarriers and the K pilot subcarriers in the Y subcarriers, X, K, and M are all positive integers, and Y is an integer greater than 2.

The foregoing solution is designed for "increasing a quantity of pilot subcarriers", and the quantity of pilot subcarriers is extended from K to K+M. That is, the M pilot subcarriers are added. This helps resist impact of a larger CFO and phase noise of a high frequency, and can also improve robustness of low-frequency transmission, thereby improving communication quality.

In a possible implementation method, a sum of quantities of pilot subcarriers corresponding to the at least one RU and/or the at least one MRU is M.

In a possible implementation method, Y=64, X=48, and K=4.

In a possible implementation method, M=4.

In a possible implementation method, locations of the X subcarriers are {-28:-23, - 20:-8, -5:-1, 1:6, 9:20, 22, 24:28}; locations of the K pilot subcarriers are {-21, -7, 7, 21}; and locations of the M pilot subcarriers are {-22, -6, 8, 23}.

In a possible implementation method, locations of the X subcarriers are {-28:-24, -22, -20:-9, -6:-1, 1:5, 8:20, 23:28}, locations of the K pilot subcarriers are {-21, -7, 7, 21}, and locations of the M pilot subcarriers are {-23, -8, 6, 22}.

In a possible implementation method, locations of the X subcarriers are {-26:-22, - 20:-8, -6:-1, 1:6, 8:20, 22:26}, locations of the K pilot subcarriers are {-21, -7, 7, 21}, and locations of the M pilot subcarriers are {-28, -27, 27, 28}.

In a possible implementation method, locations of the X subcarriers are {-27:-22, - 20:-15, -13:-8, -6:-1, 1:6, 8:13, 15:20, 22:27}, locations of the K pilot subcarriers are {-21, -7, 7, 21}, and locations of the M pilot subcarriers are {-28, -14, 14, 28}.

In a possible implementation method, the 1^{st} pilot subcarrier in the M pilot subcarriers is located in {-28:-22}, the 2^{nd} pilot subcarrier in the M pilot subcarriers is located in {-20:-8, - 6:-1}, the 3^{rd} pilot subcarrier in the M pilot subcarriers is located in {1:6, 8:20}, and the 4^{th} pilot subcarrier in the M pilot subcarriers is located in {22:28}.

In a possible implementation method, the 1^{st} pilot subcarrier in the M pilot subcarriers is located in {-28:-22, -20:-8}, the 2^{nd} pilot subcarrier in the M pilot subcarriers is located in {-6:-1}, the 3^{rd} pilot subcarrier in the M pilot subcarriers is located in {1:6}, and the 4^{th} pilot subcarrier in the M pilot subcarriers is located in {8:20, 22:28}.

In a possible implementation method, both the 1^{st} pilot subcarrier and the 2^{nd} pilot subcarrier in the M pilot subcarriers are located in one of the following intervals: {-28:-22}, {-20:-8}, and {-6:-1}; and both the 3^{rd} pilot subcarrier and the 4^{th} pilot subcarrier in the M pilot subcarriers are located in one of the following intervals: {1:6}, {8:20}, and {22:28}.

In a possible implementation method, initial pilot values of the K pilot subcarriers and initial pilot values of the M pilot subcarriers are jointly allocated, and are allocated in ascending order of frequencies of K+M pilot subcarriers as {1, 1, 1, -1, -1, 1, 1, 1}.

In a possible implementation method, initial pilot values of the K pilot subcarriers and initial pilot values of the M pilot subcarriers are jointly allocated, and are allocated in ascending order of frequencies of the K+M pilot subcarriers as {-1, -1, 1, 1, 1, -1, -1, 1}.

In a possible implementation method, initial pilot values of the K pilot subcarriers and initial pilot values of the M pilot subcarriers are independently allocated, the initial pilot values allocated to the K pilot subcarriers in ascending order of frequencies are {1, 1, 1, -1}, and the initial pilot values allocated to the M pilot subcarriers in ascending order of frequencies are {1, 1, 1, -1}.

In a possible implementation method, the X data subcarriers correspond to one data subcarrier whose size is a 52-tone RU, or the X data subcarriers correspond to two data subcarriers whose sizes are 26-tone RUs.

In a possible implementation method, Y=128, X=102, K=6, and M≥4; or Y=128, X=96, K=6, and M≥8.

In a possible implementation method, Y=256, X=204, K=8, and M≥8; or Y=256, X=192, K=8, and M≥16; or Y=256, X=228, K=8, and M≥10.

In a possible implementation method, the first bandwidth is a positive integer multiple of 20 megahertz MHz.

According to a second aspect, an embodiment of this application provides a communication apparatus. The apparatus may be a first device, or may be a module (for example, a chip) used in the first device. The apparatus has a function of implementing any implementation method according to the first aspect. The function may be implemented by hardware, or may be implemented by hardware executing corresponding software. The hardware or software includes one or more modules corresponding to the foregoing functions.

According to a third aspect, an embodiment of this application provides a communication apparatus, including units or means (means) configured to perform steps of any implementation method according to the first aspect.

According to a fourth aspect, an embodiment of this application provides a communication apparatus, including a processor and an interface circuit. The processor is configured to: communicate with another apparatus by using the interface circuit, and perform any implementation method according to the first aspect. There are one or more processors.

According to a fifth aspect, an embodiment of this application provides a communication apparatus, including a processor coupled to a memory. The processor is configured to invoke a program stored in the memory, to perform any implementation method according to the first aspect. The memory may be located inside or outside the apparatus. In addition, there may be one or more processors.

According to a sixth aspect, an embodiment of this application provides a communication apparatus, including a processor and a memory. The memory is configured to store computer instructions, and when the apparatus runs, the processor executes the computer instructions stored in the memory, so that the apparatus performs any implementation method according to the first aspect.

According to a seventh aspect, an embodiment of this application further provides a computer program product. The computer program product includes a computer program or instructions. When the computer program or the instructions are run by a communication apparatus, any implementation method according to the first aspect is performed.

According to an eighth aspect, an embodiment of this application further provides a computer-readable storage medium. The computer-readable storage medium stores instructions, and when the instructions are run on a communication apparatus, any implementation method according to the first aspect is performed.

According to a ninth aspect, an embodiment of this application further provides a chip system, including: a processor, configured to perform any implementation method according to the first aspect.

### BRIEF DESCRIPTION OF DRAWINGS

FIG. 1(a) is a diagram of an architecture of a communication system to which an embodiment of this application is applied;
FIG. 1(b) is a diagram of a network device;
FIG. 2 is a diagram of planning of a subcarrier of a 20 MHz PPDU in 802.11ac;
FIG. 3 is a diagram of planning of a subcarrier of a 20 MHz PPDU in 802.11ax and 802.11be;
FIG. 4 is a diagram of a 52-tone RU of a type a;
FIG. 5 is a diagram of a 52-tone RU of a type b;
FIG. 6 is a diagram of planning of a subcarrier of a 40MHz PPDU in 802.11ax and 802.11be;
FIG. 7 is a schematic flowchart of a communication method according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

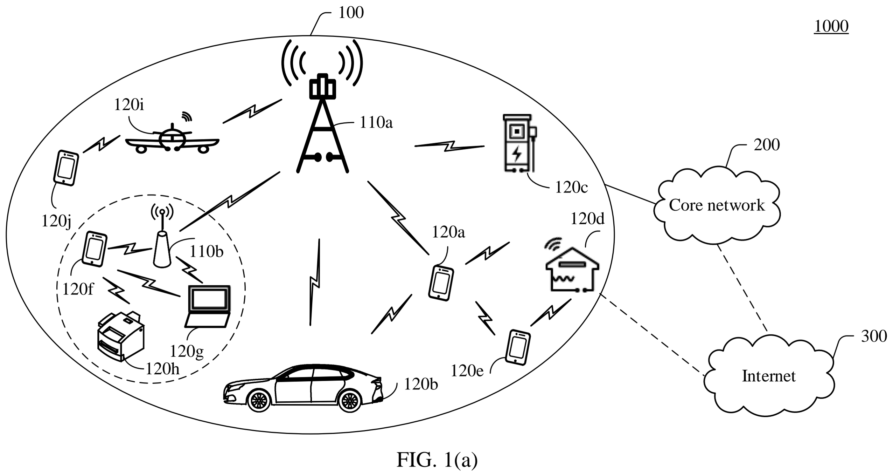

FIG. 1(a) is a diagram of an architecture of a communication system to which an embodiment of this application is applied. The communication system 1000 shown in FIG. 1(a) includes a radio access network 100 and a core network 200. Optionally, the communication system 1000 further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other; functions of the core network device and logical functions of the network device may be integrated into a same physical device; or some functions of the core network device and some functions of the network device may be integrated into one physical device. Terminal devices may be connected to each other and network devices may be connected to each other in a wired or wireless manner. FIG. 1(a) is only a diagram. The communication system may further include other network devices, for example, a wireless relay device and a wireless backhaul device, which are not shown in FIG. 1(a).

The network device is an access device for the terminal device to access the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, or an access node in a wireless-fidelity (wireless-fidelity, Wi-Fi) system (for example, a Wi-Fi system defined in 802.11a, 802.11b, 802.11n, 802.11g, 802.11ac, 802.11ax, 802.11be, 802.11bn, or the like), may also be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP). The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the network device are not limited in embodiments of this application.

The terminal device is a device that has a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and a smart city. The terminal device may be specifically a mobile phone, a tablet computer, a computer with a wireless transceiver function, a wearable device, a vehicle, an airplane, a ship, a robot, a robot arm, a smart home device, or the like. A specific technology and a specific device form that are used by the terminal device are not limited in embodiments of this application.

The network device and the terminal device may be fixed at a position, or may be movable. The network device and the terminal device may be deployed on land, including being deployed indoors or outdoors, or in a handheld manner or a vehicle-mounted manner; may be deployed on water; or may be deployed on an airplane, a balloon, and a man-made satellite. Application scenarios of the network device and the terminal device are not limited in embodiments of this application.

Roles of the network device and the terminal device may be relative. For example, the helicopter or uncrewed aerial vehicle 120i in FIG. 1(a) may be configured as a mobile network device. For the terminal device 120j that accesses the radio access network 100 via 120i, the terminal device 120i is a network device. However, for the network device 110a, 120i is a terminal device, that is, 110a and 120i communicate with each other by using a radio air interface protocol. Certainly, 110a and 120i may alternatively communicate with each other according to an interface protocol between network devices. In this case, compared with 110a, 120i is also a network device. Therefore, both the network device and the terminal device may be collectively referred to as communication apparatuses. 110a and 110b in FIG. 1(a) may be referred to as communication apparatuses having a function of the network device, and 120a to 120j in FIG. 1(a) may be referred to as communication apparatuses having a function of the terminal device.

Communication may be performed between a network device and a terminal device, between network devices, or between terminal devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. Spectrum resources used for wireless communication are not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device.

In this application, the network device sends a downlink signal or downlink information to the terminal device, and the downlink information is carried on a downlink channel. The terminal device sends an uplink signal or uplink information to the network device, and the uplink information is carried on an uplink channel. To communicate with the network device, the terminal device needs to establish a wireless connection with a cell controlled by the network device. The cell that establishes the wireless connection with the terminal device is referred to as a serving cell of the terminal device.

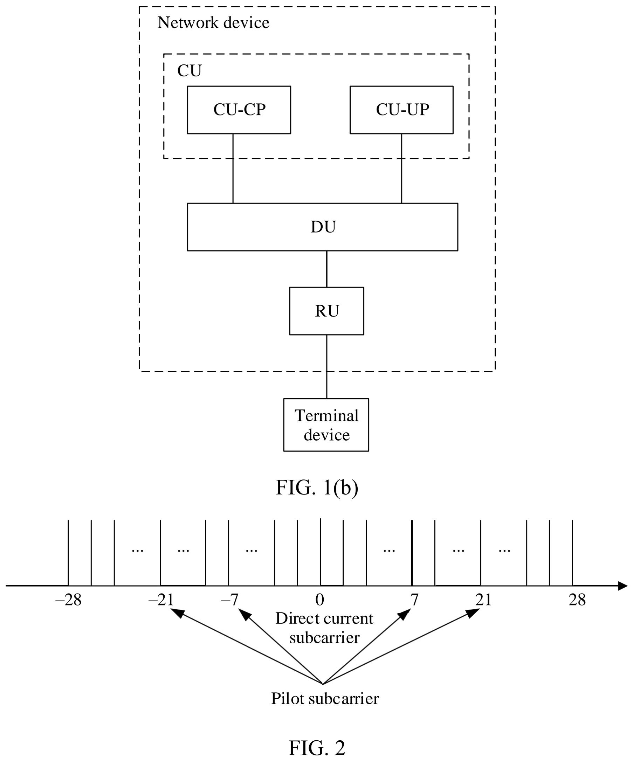

FIG. 1(b) is a diagram of a network device. As shown in FIG. 1(b), the network device includes one or more CUs, one or more DUs, and one or more radio units (radio units, RUs). For clarity, FIG. 1(b) shows only one CU, one DU, and one RU. The CU is configured to connect to a core network and the one or more DUs. Optionally, the CU may have some functions of the core network. The CU may include a CU control plane (control plane, CP) and a CU user plane (user plane, UP).

The CU and the DU may be configured based on functions, implemented by the CU and the DU, of protocol layers of a wireless network. For example, the CU is configured to implement functions of a packet data convergence protocol (packet data convergence protocol, PDCP) layer and an upper protocol layer (for example, a radio resource control (radio resource control, RRC) layer and/or a service data adaptation protocol (service data adaptation protocol, SDAP) layer), and the DU is configured to implement a function of a protocol layer (for example, a radio link control (radio link control, RLC) layer, a media access control (media access control, MAC) layer, and/or a physical (physical, PHY) layer) lower than the PDCP layer. For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, division into functions of the CU or the DU may be performed based on service types or other system requirements. For example, division may be performed based on a delay. Functions whose processing time needs to meet a requirement of a small delay are set on the DU, and functions whose processing time does not need to meet the requirement of the delay are set on the CU.

The DU and the RU may work together to implement a function of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include a part of functions of the physical layer, and the part of functions is closer to the MAC layer. The lower-layer functions of the physical layer may include another part of functions of the physical layer, and the part of functions is closer to an intermediate radio frequency side.

For ease of understanding the present invention, the following describes the background of the present invention.

### 1. Subcarrier planning of 802.11ac

802.11ac uses OFDM for low-frequency transmission and supports channel bandwidths (channel bandwidths, CBWs) of 20 MHz (MHz), 40 MHz, 80 MHz, 160 MHz, and 80+80 MHz. Table 1 lists parameters for different bandwidths.

**Table 1**

| Parameters | CBW 20 MHz | CBW 40 MHz | CBW 80 MHz | CBW 80+80 MHz | CBW 160 MHz |
|---|---|---|---|---|---|
| N_{SD} | 52 | 108 | 234 | 234 | 468 |
| N_{SP} | 4 | 6 | 8 | 8 | 16 |

NSD represents a quantity of data subcarriers (data subcarrier), and NSP represents a quantity of pilot subcarriers (pilot subcarrier). A related parameter of CBW 80+80 MHz in Table 1 is data of a single segment (segment). Therefore, a total quantity of data subcarriers of CBW 80+80 MHz is 468, and a total quantity of pilot subcarriers is 16.

A location (also referred to as an index) of a data subcarrier and a location of a pilot subcarrier are shown as follows.
20 MHz PPDU: [-28:-1] and [1:28];
40 MHz PPDU: [-58:-2] and [2:58];
80 MHz PPDU: [-122:-2] and [2:122]
160 MHz PPDU: [-250:-130], [-126:-6], [6:126], and [130:250]; and
80+80 MHz PPDU: Relative locations of a data subcarrier and a pilot subcarrier in each 80 MHz segment are consistent with those of the 80 MHz PPDU.

The location of the pilot subcarrier is as follows.
20 MHz PPDU: {±7, ±21};
40 MHz PPDU: {±11, ±25, ±53};
80 MHz PPDU: {±11, ±39, ±75, ±103};
160 MHz PPDU: {±25, ±53, ±89, ±117, ±139, ±167, ±203, ±231}; and
80+80 MHz PPDU: The relative location of the pilot subcarrier in each 80 MHz segment is consistent with that of the 80 MHz PPDU.

FIG. 2 is a diagram of planning of a subcarrier of a 20 MHz PPDU in 802.11ac. The 20 MHz PPDU corresponds to 64 subcarriers, and specifically includes 52 data subcarriers, four pilot subcarriers, one direct current component subcarrier (direct current subcarrier, DC subcarrier), and seven guard (guard) subcarriers. The direct current component subcarrier is also referred to as a direct current subcarrier or a DC for short. The seven guard subcarriers are located on two sides. For example, there are four guard subcarriers on a left side of -28 in FIG. 2, and there are three guard subcarriers on a right side of 28. FIG. 2 shows the 52 data subcarriers, the four pilot subcarriers, and the direct current subcarrier, and does not show the seven guard subcarriers. As shown in FIG. 2, a location of the direct current subcarrier is {0}, locations of the four pilot subcarriers are {±7, ±21}, and locations of the 52 data subcarriers are locations other than {0, ±7, ±21} in [-28, 28].

802.11ac has a small quantity of pilot subcarriers in subcarrier planning, which is not conducive to directly using this solution or the solution with an increased subcarrier spacing for transmission at a high frequency.

### 2. Subcarrier planning and resource units (resource units, RUs) of 802.11ax and 802.11be

802.11be and 802.11ax have consistent subcarrier planning for 20 MHz and 40 MHz PPDUs. However, when a PPDU bandwidth is greater than or equal to 80 MHz, subcarrier planning of a PPDU in 802.11be is slightly different from that of a PPDU in 802.11ax. For details, see descriptions of 802.11be and 802.11ax.

A concept of RU is introduced in the subcarrier planning solutions of 802.11ax and 802.11be. This concept is introduced to support orthogonal frequency division multiple access (orthogonal frequency division multiple access, OFDMA). To be specific, when resources are allocated to a user, an entire frequency band resource may not be allocated to one or more users at a same time, but different resource units may be allocated to the one or more users.

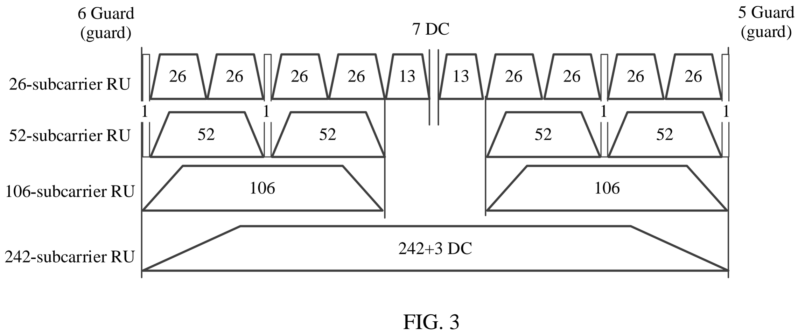

FIG. 3 is a diagram of planning of a subcarrier of a 20 MHz PPDU in 802.11ax and 802.11be. The 20 MHz PPDU corresponds to 256 subcarriers, and the 256 subcarriers are divided in a plurality of manners. For example, the following provides four different division manners, which are respectively as follows.

Manner 1: The 256 subcarriers are divided into nine RUs, seven direct current subcarriers, four null subcarriers, and 11 guard (guard) subcarriers. Each RU includes 26 subcarriers, and specifically includes 24 data subcarriers and two pilot subcarriers. Each RU is also referred to as a 26-subcarrier (tone) RU.

Manner 2: The 256 subcarriers are divided into four RUs, 33 direct current subcarriers, four null subcarriers, and 11 guard subcarriers. Each RU includes 52 subcarriers, and specifically includes 48 data subcarriers and four pilot subcarriers. Each RU is also referred to as a 52-subcarrier (tone) RU.

Manner 3: The 256 subcarriers are divided into two RUs, 33 direct current subcarriers, and 11 guard subcarriers. Each RU includes 106 subcarriers, and specifically includes 102 data subcarriers and four pilot subcarriers. Each RU is also referred to as a 106-subcarrier (tone) RU.

Manner 4: The 256 subcarriers are divided into one RU, three direct current subcarriers, and 11 guard subcarriers. Each RU includes 242 subcarriers, and specifically includes 234 data subcarriers and eight pilot subcarriers. Each RU is also referred to as a 242-subcarrier (tone) RU.

In the foregoing four division manners, sizes of the RUs obtained through division are the same. In another division manner, sizes of the RUs may alternatively be different. For example, 256 subcarriers are divided into three 26-subcarrier RUs, three 52-subcarrier RUs, a direct current subcarrier, and a guard subcarrier. For a plurality of different specific division manners of the 256 subcarriers, refer to descriptions of Table 27-26-RU Allocation subfield in 802.11ax.

The following Table 2 provides an example of a relationship between subcarrier locations and RUs of the PPDU in the 20 MHz bandwidth.

**Table 2**

| RU type | RU index and subcarrier range | | | | |
|---|---|---|---|---|---|
| 26-tone RU | RU 1 [-121:-96] | RU 2 [-95:-70] | RU 3 [-68:-43] | RU 4 [-42:-17] | RU 5 [-16:-4, 4:16] |
| | RU 6 [17:42] | RU 7 [43:68] | RU 8 [70:95] | RU 9 [96:121] | |
| 52-tone RU | RU 1 [-121:-70] | RU 2 [-68:-17] | RU 3 [17:68] | RU 4 [70:121] | |
| 106-tone RU | RU 1 [-121:-17] | | RU 2 [17:122] | | |
| 242-tone RU | RU 1 [-122:-2, 2:122] | | | | |

It can be learned from Table 2 that, the 26-tone RU is used as an example, locations of 26 subcarriers of a first RU (namely, the RU 1) are [-121:-96], and locations of 26 subcarriers of a second RU (namely, the RU 2) are [-95:-70], and the rest is similar. Details are not described.

The 52-tone RU is used as an example, and locations of pilot subcarriers in four 52-tone RUs in the 20 MHz PPDU are respectively the following.

The locations of the pilot subcarriers in an RU 1 of the 52-tone RUs are {{-116, -102, -90, -76}.

The locations of the pilot subcarriers in an RU 2 of the 52-tone RUs are {-62, -48, -36, -22}.

The locations of the pilot subcarriers in an RU 3 of the 52-tone RUs are {22, 36, 48, 62}.

The locations of the pilot subcarriers in an RU 4 of the 52-tone RUs are {76, 90, 102, 116}.

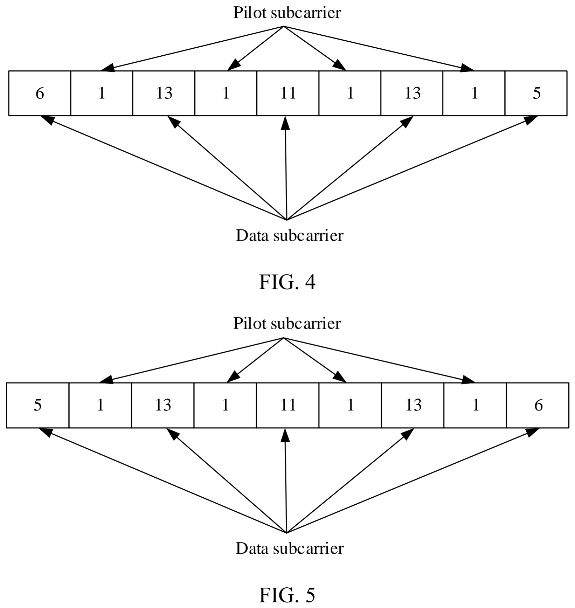

The 52-tone RU is classified into a type-a 52-tone RU (as shown in FIG. 4) and a type-b 52-tone RU (as shown in FIG. 5). The type-a 52-tone RU is sequentially: six data subcarriers, one pilot subcarrier, 13 data subcarriers, one pilot subcarrier, 11 data subcarriers, one pilot subcarrier, 13 data subcarriers, one pilot subcarrier, and five data subcarriers. The type-b 52-tone RU is sequentially: five data subcarriers, one pilot subcarrier, 13 data subcarriers, one pilot subcarrier, 11 data subcarriers, one pilot subcarrier, 13 data subcarriers, one pilot subcarrier, and six data subcarriers.

It can be learned from Table 2 that, types of the four 52-tone RUs in 20 MHz are sequentially: the type b, the type a, the type b, and the type a.

In 802.11be, each RU may be allocated to one or more users, and each user may be allocated one or more RUs. FIG. 3 is used as an example. For a 20 MHz PPDU, nine 26-tone RUs may be respectively allocated to a total of nine users, or one 106-tone RU may be allocated to one or more users. In 802.11be, further, an MRU configuration is further supported. To be specific, a plurality of RUs are allocated to one or more users at the same time. A specific supported MRU configuration may be 52+26, 106+26, 484+242, 996+484, 2*996+484, 3*996+484, 3*996, 242+484+996, or the like. 52+26 indicates that one 52-tone RU and one 26-tone RU form one MRU. Others are similar, and details are not described.

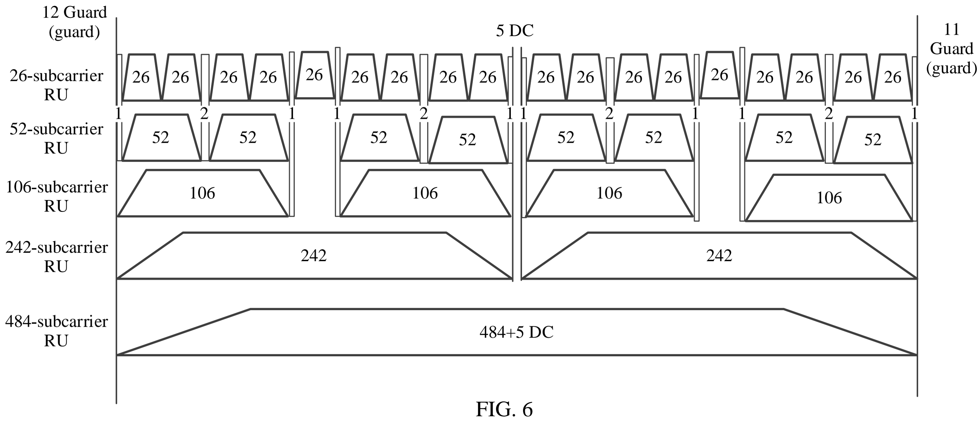

FIG. 6 is a diagram of planning of a subcarrier of a 40MHz PPDU in 802.11ax and 802.11be. A principle of planning of the subcarrier of the 40 MHz PPDU is similar to that of planning of the subcarrier of the 20 MHz PPDU. For detailed descriptions, refer to related descriptions of 802.11ax and 802.11be. Details are not described herein again. For planning of a subcarrier of a PPDU with a bandwidth greater than 40 MHz, refer to related descriptions of 802.11ax and 802.11be.

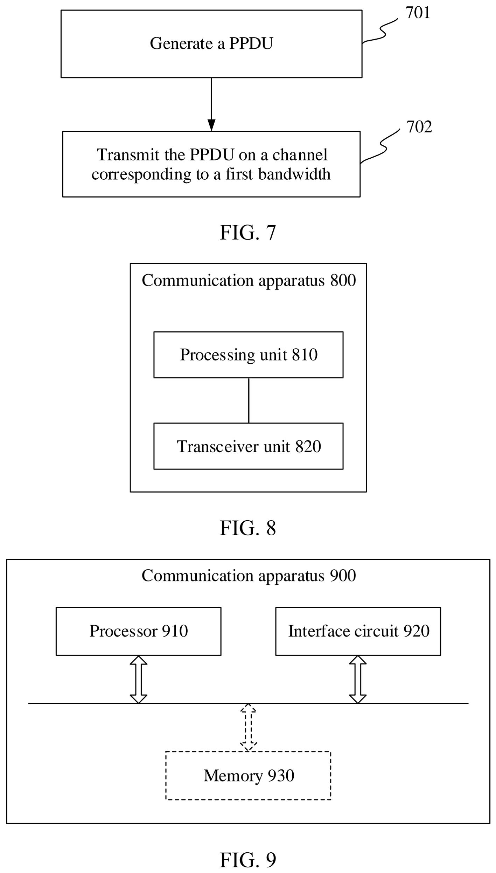

FIG. 7 is a schematic flowchart of a communication method according to an embodiment of this application. The method is performed by a first device or a module used in the first device. The first device may be a terminal device or a network device. The method includes the following steps.

Step 701: Generate a PPDU.

Step 702: Transmit the PPDU on a channel corresponding to a first bandwidth.

Transmitting the PPDU on the channel corresponding to the first bandwidth may be understood as transmitting all content of the PPDU or transmitting a data field part of the PPDU on the channel corresponding to the first bandwidth.

X subcarriers in Y subcarriers corresponding to the first bandwidth are used to carry data corresponding to X data subcarriers of at least one RU and/or at least one MRU, the X subcarriers are subcarriers other than K pilot subcarriers in the Y subcarriers, the Y subcarriers further include M pilot subcarriers, the M pilot subcarriers are subcarriers other than the X subcarriers and the K pilot subcarriers in the Y subcarriers, X, K, and M are all positive integers, and Y is an integer greater than 2.

The Y subcarriers corresponding to the first bandwidth include one or more of a data subcarrier, a pilot subcarrier, a null subcarrier, a direct current subcarrier, and a guard subcarrier. The X subcarriers are any X subcarriers in the Y subcarriers. Therefore, the X subcarriers include one or more of the data subcarrier, the pilot subcarrier, the null subcarrier, the direct current subcarrier, and the guard subcarrier.

After the X subcarriers in the Y subcarriers corresponding to the first bandwidth carry the data corresponding to the X data subcarriers of the at least one RU and/or the at least one MRU, any K+M subcarriers in remaining Y-X subcarriers may carry pilot values corresponding to K+M pilot subcarriers.

A value of M herein is not necessarily associated with a quantity (represented by Z) of pilot subcarriers in the at least one RU and/or the at least one MRU. In other words, M may be greater than Z, may be less than Z, or may be equal to Z.

A sum of quantities of pilot subcarriers corresponding to the at least one RU and/or the at least one MRU is M. For example, if the X subcarriers in the Y subcarriers corresponding to the first bandwidth are used to carry data corresponding to X data subcarriers of two RUs, a sum of quantities of pilot subcarriers corresponding to the two RUs is M. For another example, if the X subcarriers in the Y subcarriers corresponding to the first bandwidth are used to carry data corresponding to X data subcarriers of two RUs and one MRU, a sum of quantities of pilot subcarriers corresponding to the two RUs and the MRU is M. For another example, if the X subcarriers in the Y subcarriers corresponding to the first bandwidth are used to carry data corresponding to X data subcarriers of one MRU, a sum of quantities of pilot subcarriers corresponding to the MRU is M.

For example, the M pilot subcarriers corresponding to the at least one RU and/or the at least one MRU correspond to M pilot subcarriers in the Y subcarriers corresponding to the first bandwidth.

Values of Y, X, K, and M are not limited in this application. For example, when the first bandwidth is 40 MHz, and the X subcarriers in the Y subcarriers on the first bandwidth are used to carry data corresponding to 102 data subcarriers in a 106-tone RU, Y=128, X=102, K=6, and M≥4. For another example, when the first bandwidth is 40 MHz, and the X subcarriers in the Y subcarriers on the first bandwidth are used to carry data corresponding to 2×48 data subcarriers in two 52-tone RUs, Y=128, X=96, K=6, and M≥8. For another example, when the first bandwidth is 80 MHz, and the X subcarriers in the Y subcarriers on the first bandwidth are used to carry data corresponding to 2×102 data subcarriers in two 106-tone RUs, Y=256, X=204, K=8, and M≥8. For another example, when the first bandwidth is 80 MHz, and the X subcarriers in the Y subcarriers on the first bandwidth are used to carry data corresponding to 4×48 data subcarriers in four 52-tone RUs, Y=256, X=192, K=8, and M≥16. For another example, when the first bandwidth is 80 MHz, and the X subcarriers in the Y subcarriers on the first bandwidth are used to carry data corresponding to 2×102+24 data subcarriers in two 106-tone RUs and one 26-tone RU, Y=256, X=228, K=8, and M≥10. For another example, Y=64, X=48, K=4, and M≥4.

The foregoing solution is designed for "increasing a quantity of pilot subcarriers", and the quantity of pilot subcarriers is extended from K to K+M. That is, the M pilot subcarriers are added. This helps resist impact of a larger CFO and phase noise of a high frequency, and can also improve robustness of low-frequency transmission, thereby improving communication quality.

A core idea of the present invention is that data corresponding to a data subcarrier of the at least one RU and/or the at least one MRU is carried in existing subcarriers in subcarrier planning of 802.11ac, to obtain more pilot subcarriers. This processing can be performed because a generation manner corresponding to the RU or the MRU can be reused, to obtain data subcarriers corresponding to a quantity of RUs or MRUs.

In the following, an OFDM subcarrier planning with an additional pilot is designed with reference to existing OFDM subcarrier planning like 802.11ac, 802.11ax, and 802.11be. Specifically, data corresponding to a data subcarrier of the at least one RU with a same size or a smaller size is carried on some subcarriers in subcarrier planning (for example, 802.11ac) in which each 20 MHz corresponds to 64 subcarriers. The RU size is an RU size defined in subcarrier planning (for example, 802.11ax and 802.11be) in which each 20 MHz corresponds to 256 subcarriers. Alternatively, it may be understood as that data corresponding to a data subcarrier of at least one RU with an equal granularity or a smaller granularity is carried on some subcarriers in subcarrier planning (for example, 802.11ac) in a non-OFDMA form, to obtain more pilot subcarriers.

It should be noted that this application is not limited to the subcarrier planning in which 20 MHz corresponds to 64 subcarriers. In a solution of a version with an increased subcarrier spacing, a bandwidth that is an integer multiple of 20 MHz may correspond to the 64 subcarriers, and the integer multiple may be, for example, 2, 4, 8, or 16. For ease of understanding, an example in which 20 MHz corresponds to 64 subcarriers is used for description in the following.

Similarly, a larger bandwidth used at a high frequency in 802.11ac may also be an integer multiple of a bandwidth corresponding to a low frequency. For example, an integer multiple of 40 MHz corresponds to 128 subcarriers, an integer multiple of 80 MHz corresponds to 256 subcarriers, and an integer multiple of 160 MHz or 80+80 MHz corresponds to 256 subcarriers.

Similarly, a larger bandwidth used at a high frequency in 802.11ax and 802.11be may also be an integer multiple of a bandwidth corresponding to a low frequency. For example, an integer multiple of 20 MHz corresponds to 256 subcarriers, an integer multiple of 40 MHz corresponds to 512 subcarriers, and so on.

For example, a PPDU in 802.11ac is 20 MHz. As shown in Table 1, a quantity of data subcarriers is 52, and a quantity of pilot subcarriers is 4. With reference to an RU size, because there are a 52-tone RU and a 26-tone RU, to increase a quantity of pilot subcarriers, data corresponding to a data subcarrier of at least one RU with a same size or a smaller size may be carried on a subcarrier in non-OFDMA subcarrier planning of 802.11ac. For example, data corresponding to 48 data subcarriers of one 52-tone RU or two 26-tone RUs shown in FIG. 3 may be carried on 52 data subcarriers. Therefore, four (that is, 52-48=4) pilot subcarriers may be further carried. In addition, four pilot subcarriers carried in 20 MHz subcarrier planning of 802.11ac are added, so that eight pilot subcarriers may be obtained.

For example, a PPDU in 802.11ac is 40 MHz. As shown in Table 1, a quantity of data subcarriers is 108, and a quantity of pilot subcarriers is 6. With reference to an MRU size, because there is a 52+26-tone MRU, and the MRU includes 72 data subcarriers and six pilot subcarriers, to increase a quantity of pilot subcarriers, data corresponding to a data subcarrier of at least one MRU with a same size or a smaller size may be carried on a subcarrier in non-OFDMA subcarrier planning of 802.11ac. For example, data corresponding to 72 data subcarriers of a 52+26-tone MRU may be carried on 108 data subcarriers. Therefore, 36 (that is, 108-72=36) pilot subcarriers may be further carried. In addition, six pilot subcarriers carried in 40 MHz subcarrier planning of 802.11ac are added, so that 42 pilot subcarriers may be obtained.

With reference to the embodiment in FIG. 7, when the first bandwidth is 20 MHz, Y=64, X=48, K=4, and M=4. That is, 48 subcarriers in 64 subcarriers corresponding to 20 MHz in 802.11ac are used to carry data corresponding to 48 data subcarriers of at least one RU. In addition to the 48 data subcarriers, the 64 subcarriers further include four original pilot subcarriers, and further include four added pilot subcarriers. In addition, the 64 subcarriers further include one direct current subcarrier and seven guard subcarriers. Therefore, after the method in the present invention is used, the 64 subcarriers corresponding to 20 MHz in 802.11ac include 48 data subcarriers, eight pilot subcarriers, one direct current subcarrier, and seven guard subcarriers. It should be noted that locations of the four original pilot subcarriers may not change, or may change. This is not limited in this application.

M and X form a size (size) of the at least one RU and/or the at least one MRU, that is, a total quantity of subcarriers corresponding to the at least one RU and/or the at least one MRU is M+X. In addition, because X and M may be separated during generation, M+X may not meet the size of the at least one RU and/or the at least one MRU. For example, although X=48 and M=4 are used as an example herein, M may be greater than 4 or less than 4. This is uniformly described herein, and details are not described below again.

This application provides a plurality of methods for mapping at least one RU and/or at least one MRU to subcarrier planning of 802.11ac.

Method 1: Subcarriers in the subcarrier planning of 802.11ac sequentially carry data corresponding to data subcarriers in the at least one RU and/or the at least one MRU.

That 52 data subcarriers in 64 subcarriers corresponding to 20 MHz in 802.11ac carry data corresponding to 48 data subcarriers of one 52-tone RU is used as an example. A form of the 52-tone RU may be a type a shown in FIG. 4 or a type b shown in FIG. 5.

When the 52-tone RU uses the type a as a template, subcarrier distribution is as follows.

Locations of the 48 data subcarriers are {-28:-23, -20:-8, -5:-1, 1:6, 9:20, 22, 24:28};
locations of four original pilot subcarriers are {-21, -7, 7, 21}; and
locations of four extended pilot subcarriers are {-22, -6, 8, 23}.

In this embodiment of this application, "a:b" indicates all values in a range. A minimum value of the range is a and contains a, a maximum value of the range is b and contains b, and an increment step of the range is 1. For example, "-28:-23" indicates values: -28, -27, -26, -25, - 24, and -23. This is uniformly described herein, and details are not described below again.

When the 52-tone RU uses the type b as a template, subcarrier distribution is as follows.

Locations of the 48 data subcarriers are {-28:-24, -22, -20:-9, -6:-1, 1:5, 8:20, 23:28};
locations of four original pilot subcarriers are {-21, -7, 7, 21}; and
locations of four extended pilot subcarriers are {-23, -8, 6, 22}.

Method 2: X subcarriers are selected from subcarrier planning of 802.11ac, and the X subcarriers carry data corresponding to X data subcarriers in at least one RU and/or the at least one MRU.

For example, 48 data subcarriers are selected from 52 data subcarriers in 64 subcarriers corresponding to 20 MHz of 802.11ac, and the 48 data subcarriers are used to carry data corresponding to the 48 data subcarriers in the 52-tone RU.

A specific implementation method for selecting the 48 data subcarriers from the 52 data subcarriers in the 64 subcarriers corresponding to 20 MHz of 802.11ac is not limited in the present invention.

Example 1: Two data subcarriers on each of left and right sides of the 52 data subcarriers are removed, where locations of the four removed data subcarriers are used to carry four extended pilot subcarriers.

Based on Example 1, locations of the 48 data subcarriers are {-26:-22, -20:-8, -6:-1, 1:6, 8:20, 22:26}, locations of four original pilot subcarriers are {-21, -7, 7, 21}, and locations of the four extended pilot subcarriers are {-28, -27, 27, 28}.

Example 2: Four data subcarriers are selected from the 52 data subcarriers in a relatively even manner and are removed, and locations of the removed four data subcarriers are used to carry the four extended pilot subcarriers.

Based on Example 2, in an implementation method, the 1^{st} pilot subcarrier in the four extended pilot subcarriers is located in {-28:-22}, the 2^{nd} pilot subcarrier in the four extended pilot subcarriers is located in {-20:-8, -6:-1}, the 3^{rd} pilot subcarrier in the four extended pilot subcarriers is located in {1:6, 8:20}, and the 4^{th} pilot subcarrier in the four extended pilot subcarriers is located in {22:28}. For example, locations of the 48 data subcarriers are {-27:-22, -20:-15, -13:-8, -6:-1, 1:6, 8:13, 15:20, 22:27}, locations of four original pilot subcarriers are {-21, -7, 7, 21}, and locations of the four extended pilot subcarriers are {-28, -14, 14, 28}.

Based on Example 2, in another implementation method, the 1^{st} pilot subcarrier in the four extended pilot subcarriers is located in {-28:-22, -20:-8}, the 2^{nd} pilot subcarrier in the four extended pilot subcarriers is located in {-6:-1}, the 3^{rd} pilot subcarrier in the four extended pilot subcarriers is located in {1:6}, and the 4^{th} pilot subcarrier in the four extended pilot subcarriers is located in {8:20, 22:28}.

Based on Example 2, in another implementation method, both the 1^{st} pilot subcarrier and the 2^{nd} pilot subcarrier in the four extended pilot subcarriers are located in the following intervals: {-28:-22}, {-20:-8}, and {-6:-1}, that is, both the 1^{st} pilot subcarrier and the 2^{nd} pilot subcarrier are in {-28:-22}, or in {-20:-8}, or in {-6:-1}, and both the 3^{rd} pilot subcarrier and the 4^{th} pilot subcarrier in the four extended pilot subcarriers are located in the following intervals: {1:6}, {8:20}, and {22:28}, that is, both the 3^{rd} pilot subcarrier and the 4^{th} pilot subcarrier are in {1:6}, or in {8:20}, or in {22:28}.

The foregoing describes different implementation methods for carrying data corresponding to a data subcarrier of one 52-tone RU on 52 data subcarriers in 64 subcarriers corresponding to 20 MHz in 802.11ac. In another implementation method, the data corresponding to the data subcarrier of the 52-tone RU may alternatively be carried on a pilot subcarrier, a null subcarrier, or a guard subcarrier in the 64 subcarriers corresponding to 20 MHz in 802.11ac. That is, 52 subcarriers are randomly found from the 64 subcarriers corresponding to 20 MHz in 802.11ac, and are used to carry data corresponding to a data subcarrier of one 52-tone RU. Other subcarriers may be used as pilot subcarriers, null subcarriers, direct current subcarriers, guard subcarriers, or the like.

An advantage of the foregoing approach is as follows. For example, for a 52-tone RU, a quantity of four pilot subcarriers in 802.11ac is small. If the quantity of pilot subcarriers is directly increased, a quantity of data subcarriers that can be provided by each OFDM symbol may change. An existing baseband design cannot be directly used due to the change. In other words, an interleaver, a subcarrier mapper, and the like corresponding to a quantity of subcarriers need to be redesigned. Because the RU size is a design that has been implemented in 802.11ax and 802.11be, an RU defined in 802.11ax and 802.11be can be used to generate data corresponding to a data subcarrier in subcarrier planning of 802.11ac that is designed earlier.

In the solution of the embodiment in FIG. 7, after the K+M pilot subcarriers are obtained, how to define pilot values of the K+M pilot subcarriers is provided with different implementations in this application.

Method 1: Pilot values of the M original pilot subcarriers and pilot values of K extended pilot subcarriers are independently allocated.

For example, 52 data subcarriers in 64 subcarriers corresponding to 20 MHz in 802.11ac carry data corresponding to 48 data subcarriers of one 52-tone RU. If K=M=4, pilot values of four original pilot subcarriers and pilot values of four extended pilot subcarriers may be independently allocated. In other words, the pilot values of the four original pilot subcarriers are pilot values of the pilot subcarriers, and the pilot values of the four extended pilot subcarriers are also the pilot values of the four pilot subcarriers of the 52-tone RU.

The pilot values of the 52-tone RU are allocated in ascending order of frequencies as {1, 1, 1, -1}. Therefore, the pilot values of the four extended pilot subcarriers are allocated in ascending order of frequencies as {1, 1, 1, -1}.

The pilot values of the four original pilot subcarriers are allocated in ascending order of frequencies as {1, 1, 1, -1}.

It should be noted that, the pilot values of the four original pilot subcarriers may dynamically change, or certainly may not change.

Method 2: Pilot values of the M original pilot subcarriers and pilot values of K extended pilot subcarriers are jointly allocated.

Jointly allocated pilot values may be obtained based on an existing pilot sequence, or may be obtained by splicing a plurality of smaller pilot sequences, or may be obtained by removing some values from a larger pilot sequence.

If the concatenation manner is used, to-be-concatenated pilot sequences may be processed and then concatenated. For example, a pilot sequence 1 and a pilot sequence 2 are first obtained, the pilot sequence 1 is multiplied by -1 to obtain a pilot sequence 3, and the pilot sequence 3 is concatenated with the pilot sequence 2 to obtain M+K pilot values. For another example, a pilot sequence 4 and a pilot sequence 5 are first obtained, the pilot sequence 4 is reversed to obtain a pilot sequence 6, and the pilot sequence 5 is concatenated with the pilot sequence 6 to obtain M+K pilot values.

For example, 52 data subcarriers in 64 subcarriers corresponding to 20 MHz in 802.11ac carry data corresponding to 48 data subcarriers mapped to one 52-tone RU. If K=M=4, pilot values of four original pilot subcarriers and pilot values of four extended pilot subcarriers may be jointly allocated. That is, the four original pilot subcarriers and the four extended pilot subcarriers are allocated pilot values as a whole, that is, eight pilot values need to be allocated.

For example, different pilot values defined by the institute of electrical and electronics engineers (institute of electrical and electronic engineers, IEEE) standard for various RUs may be used. For example,
two pilot values are defined for the 26-tone RU: Ψ0~Ψ1={1, -1};
four pilot values are defined for the 52-tone RU: Ψ0~Ψ3={1, 1, 1, -1};
four pilot values are defined for the 106-tone RU: Ψ0~Ψ3={1, 1, 1, -1}; and
eight pilot values are defined for the 242-tone RU: Ψ0~Ψ7={1, 1, 1, -1, -1, 1, 1, 1}.

Therefore, when pilot values need to be jointly allocated to the four original pilot subcarriers and the four extended pilot subcarriers, eight pilot values in the 242-tone RU may be reused. That is, pilot values of the four original pilot subcarriers and pilot values of the four extended pilot subcarriers are jointly allocated, and are Ψ0~Ψ7, namely, {1, 1, 1, -1, -1, 1, 1, 1}.

For example, in 802.11ax, when the locations of the four pilot subcarriers are {-28, - 27, 27, 28}, the pilot values of the four pilot subcarriers may be {-1, -1, -1, 1}. Therefore, when the locations of the four original pilot subcarriers are {-21, -7, 7, 21}, and the locations of the four extended pilot subcarriers are {-28, -27, 27, 28}, the pilot values of the four extended pilot subcarriers may be {-1, -1, -1, 1}, and the pilot values of the four original pilot subcarriers may be {1, 1, 1, -1}. In other words, the pilot values of the four original pilot subcarriers and the pilot values of the four pilot subcarriers are jointly allocated, and are allocated in ascending order of frequencies of the K+M pilot subcarriers as {-1, -1, 1, 1, 1, -1, -1, 1}.

It should be noted that the pilot value may be understood as an initial pilot value. In the standard, as an OFDM symbol increases, the pilot value may change based on the initial pilot value. For example, a change manner in the existing standard is that each time an OFDM symbol is added, initial pilot sequences corresponding to one or more RUs in the OFDM symbol is circularly shifted rightward once. For example, an original OFDM symbol is {1, 1, 1, -1, -1, 1, 1, 1}, and a next OFDM symbol is changed to {1, 1, 1, 1, -1, -1, 1, 1}. Herein, a manner of generating a pilot value after a symbol changes is not limited, and may be an existing method in the standard.

The 52-tone RU is merely an example. If there is a case in which 10 pilot subcarriers or 18 pilot subcarriers are extended, and the case does not exist in the standard, the pilot values defined by the IEEE may be spliced or removed. 10 pilot subcarriers are used as an example. If a splicing manner is used, pilot values of the 10 pilot subcarriers may be spliced in a 4+4+2 manner. For example, four pilot values of a 52-tone RU, four pilot values of a 106-tone RU, and two pilot values of a 26-tone RU are spliced into 10 pilot values. 10 pilot subcarriers are used as an example. If a removal manner is used, pilot values of the 10 pilot subcarriers may be removed in a 16-6=10 manner, and the like.

It should be noted that, although the foregoing manner is performed by using an example in which 48 subcarriers in 64 subcarriers carry data corresponding to 48 data subcarriers in a 52-tone RU, actually, a value of Y and sizes and a quantity of RUs or MRUs corresponding to data subcarriers corresponding to data to be carried are not limited. For example, 48 subcarriers in 64 subcarriers may carry data corresponding to data subcarriers corresponding to two 26-tone RUs, and four subcarriers other than the pilot subcarriers that originally exist in the 64 subcarriers are used as new pilot subcarriers.

The present invention may also be combined with dual-carrier modulation (dual-carrier modulation, DCM), that is, a DCM manner supported by the RU in the standard is still applicable to the foregoing subcarrier distribution.

It can be understood that, to implement the functions in the foregoing embodiment, the first device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 8 and FIG. 9 are diagrams of structures of possible communication apparatuses according to an embodiment of this application. These communication apparatuses may be configured to implement functions of the first device in the foregoing method embodiments. Therefore, beneficial effects of the foregoing method embodiments can also be implemented. In embodiments of this application, the communication apparatus may be the first device, or may further be a module (for example, a chip) used in the first device.

A communication apparatus 800 shown in FIG. 8 includes a processing unit 810 and a transceiver unit 820. The communication apparatus 800 is configured to implement functions of the first device in the foregoing method embodiments.

When the communication apparatus 800 is configured to implement functions of the first device in the foregoing method embodiment, the processing unit 810 is configured to generate a PPDU; and the transceiver unit 820 is configured to transmit the PPDU on a channel corresponding to a first bandwidth, where X subcarriers in Y subcarriers corresponding to the first bandwidth are used to carry data corresponding to X data subcarriers of at least one resource unit (resource unit, RU) and/or at least one multi-resource unit (multi-resource unit, MRU), the X subcarriers are subcarriers other than K pilot subcarriers in the Y subcarriers, the Y subcarriers further include M pilot subcarriers, the M pilot subcarriers are subcarriers other than the X subcarriers and the K pilot subcarriers in the Y subcarriers, X, K, and M are all positive integers, and Y is an integer greater than 2.

In a possible implementation method, a sum of quantities of pilot subcarriers corresponding to the at least one RU and/or the at least one MRU is M.

In a possible implementation method, Y=64, X=48, and K=4.

In a possible implementation method, M=4.

In a possible implementation method, locations of the X subcarriers are {-28:-23, - 20:-8, -5:-1, 1:6, 9:20, 22, 24:28}, locations of the K pilot subcarriers are {-21, -7, 7, 21}, and locations of the M pilot subcarriers are {-22, -6, 8, 23}.

In a possible implementation method, locations of the X subcarriers are {-28:-24, -22, -20:-9, -6:-1, 1:5, 8:20, 23:28}, locations of the K pilot subcarriers are {-21, -7, 7, 21}, and locations of the M pilot subcarriers are {-23, -8, 6, 22}.

In a possible implementation method, locations of the X subcarriers are {-26:-22, - 20:-8, -6:-1, 1:6, 8:20, 22:26}, locations of the K pilot subcarriers are {-21, -7, 7, 21}, and locations of the M pilot subcarriers are {-28, -27, 27, 28}.

In a possible implementation method, the 1^{st} pilot subcarrier in the M pilot subcarriers is located in {-28:-22}, the 2^{nd} pilot subcarrier in the M pilot subcarriers is located in {-20:-8, - 6:-1}, the 3^{rd} pilot subcarrier in the M pilot subcarriers is located in {1:6, 8:20}, and the 4^{th} pilot subcarrier in the M pilot subcarriers is located in {22:28}.

In a possible implementation method, the 1^{st} pilot subcarrier in the M pilot subcarriers is located in {-28:-22, -20:-8}, the 2^{nd} pilot subcarrier in the M pilot subcarriers is located in {-6:-1}, the 3^{rd} pilot subcarrier in the M pilot subcarriers is located in {1:6}, and the 4^{th} pilot subcarrier in the M pilot subcarriers is located in {8:20, 22:28}.

In a possible implementation method, initial pilot values of the K pilot subcarriers and initial pilot values of the M pilot subcarriers are jointly allocated, and are allocated in ascending order of frequencies of K+M pilot subcarriers as {1, 1, 1, -1, -1, 1, 1, 1}.

In a possible implementation method, initial pilot values of the K pilot subcarriers and initial pilot values of the M pilot subcarriers are jointly allocated, and are allocated in ascending order of frequencies of the K+M pilot subcarriers as {-1, -1, 1, 1, 1, -1, -1, 1}.

In a possible implementation method, initial pilot values of the K pilot subcarriers and initial pilot values of the M pilot subcarriers are independently allocated, the initial pilot values allocated to the K pilot subcarriers in ascending order of frequencies are {1, 1, 1, -1}, and the initial pilot values allocated to the M pilot subcarriers in ascending order of frequencies are {1, 1, 1, -1}.

In a possible implementation method, the first bandwidth is a positive integer multiple of 20 megahertz MHz.

For more detailed descriptions of the processing unit 810 and the transceiver unit 820, directly refer to related descriptions in the foregoing method embodiments. Details are not described herein again.

A communication apparatus 900 shown in FIG. 9 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs instructions.

When the communication apparatus 900 is configured to implement the foregoing method embodiments, the processor 910 is configured to implement functions of the processing unit 810, and the interface circuit 920 is configured to implement functions of the transceiver unit 820.

It can be understood that the processor in the embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instruction may be composed of corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact optical disk read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a first device. Certainly, the processor and the storage medium may also exist in the access network device or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. The computer program (English: Computer Program) is a set of instructions that indicate each step of an electronic computer or another device having a message processing capability, is usually written in a program design language, and is run in a target system structure. When the computer programs or the instructions are loaded and executed on a computer, all or some of the procedures or functions in embodiments of this application are executed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
generating a physical layer protocol data unit PPDU; and
transmitting the PPDU on a channel corresponding to a first bandwidth, wherein
X subcarriers in Y subcarriers corresponding to the first bandwidth are used to carry data corresponding to X data subcarriers of at least one resource unit RU and/or at least one multi-resource unit MRU, the X subcarriers are subcarriers other than K pilot subcarriers in the Y subcarriers, the Y subcarriers further comprise M pilot subcarriers, the M pilot subcarriers are subcarriers other than the X subcarriers and the K pilot subcarriers in the Y subcarriers, X, K, and M are all positive integers, and Y is an integer greater than 2.

2. The method according to claim 1, wherein a sum of quantities of pilot subcarriers corresponding to the at least one RU and/or the at least one MRU is M.

3. The method according to claim 1 or 2, wherein Y=64, X=48, and K=4.

4. The method according to claim 3, wherein M=4.

5. The method according to claim 4, wherein
locations of the X subcarriers are {-28:-23, -20:-8, -5:-1, 1:6, 9:20, 22, 24:28};
locations of the K pilot subcarriers are {-21, -7, 7, 21}; and
locations of the M pilot subcarriers are {-22, -6, 8, 23}.

6. The method according to claim 4, wherein
locations of the X subcarriers are {-28:-24, -22, -20:-9, -6:-1, 1:5, 8:20, 23:28};
locations of the K pilot subcarriers are {-21, -7, 7, 21}; and
locations of the M pilot subcarriers are {-23, -8, 6, 22}.

7. The method according to claim 4, wherein
locations of the X subcarriers are {-26:-22, -20:-8, -6:-1, 1:6, 8:20, 22:26};
locations of the K pilot subcarriers are {-21, -7, 7, 21}; and
locations of the M pilot subcarriers are {-28, -27, 27, 28}.

8. The method according to claim 4, wherein
locations of the X subcarriers are {-27:-22, -20:-15, -13:-8, -6:-1, 1:6, 8:13, 15:20, 22:27};
locations of the K pilot subcarriers are {-21, -7, 7, 211; and
locations of the M pilot subcarriers are {-28, -14, 14, 28}.

9. The method according to claim 4, wherein
the 1^{st} pilot subcarrier in the M pilot subcarriers is located in {-28:-22}, the 2^{nd} pilot subcarrier in the M pilot subcarriers is located in {-20:-8, -6:-1}, the 3^{rd} pilot subcarrier in the M pilot subcarriers is located in {1:6, 8:20}, and the 4^{th} pilot subcarrier in the M pilot subcarriers is located in {22:28}.

10. The method according to claim 4, wherein
the 1^{st} pilot subcarrier in the M pilot subcarriers is located in {-28:-22, -20:-8}, the 2^{nd} pilot subcarrier in the M pilot subcarriers is located in {-6:-1}, the 3^{rd} pilot subcarrier in the M pilot subcarriers is located in {1:6}, and the 4^{th} pilot subcarrier in the M pilot subcarriers is located in {8:20, 22:28}.

11. The method according to claim 4, wherein
both the 1^{st} pilot subcarrier and the 2^{nd} pilot subcarrier in the M pilot subcarriers are located in one of the following intervals: {-28:-22}, {-20:-8}, and {-6:-1}; and both the 3^{rd} pilot subcarrier and the 4^{th} pilot subcarrier in the M pilot subcarriers are located in one of the following intervals: {1:6}, {8:20}, and {22:28}.

12. The method according to any one of claims 4 to 11, wherein initial pilot values of the K pilot subcarriers and initial pilot values of the M pilot subcarriers are jointly allocated, and are allocated in ascending order of frequencies of K+M pilot subcarriers as {1, 1, 1, -1, -1, 1, 1, 1}.

13. The method according to any one of claims 4 to 11, wherein initial pilot values of the K pilot subcarriers and initial pilot values of the M pilot subcarriers are jointly allocated, and are allocated in ascending order of frequencies of K+M pilot subcarriers as {-1, -1, 1, 1, 1, -1, -1, 1}.

14. The method according to any one of claims 4 to 11, wherein initial pilot values of the K pilot subcarriers and initial pilot values of the M pilot subcarriers are independently allocated, the initial pilot values allocated to the K pilot subcarriers in ascending order of frequencies are {1, 1, 1, -1}, and the initial pilot values allocated to the M pilot subcarriers in ascending order of frequencies are {1, 1, 1, -1}.

15. The method according to any one of claims 1 to 14, wherein the X data subcarriers correspond to one data subcarrier whose size is a 52-tone RU, or the X data subcarriers correspond to two data subcarriers whose sizes are 26-tone RUs.

16. The method according to claim 1 or 2, wherein Y=128, X=102, K=6, and M≥4; or Y=128, X=96, K=6, and M≥8.

17. The method according to claim 1 or 2, wherein Y=256, X=204, K=8, and M≥8; or Y=256, X=192, K=8, and M≥16; or Y=256, X=228, K=8, and M≥10.

18. The method according to any one of claims 1 to 17, wherein the first bandwidth is a positive integer multiple of 20 megahertz MHz.

19. A communication apparatus, comprising a processor and an interface circuit, wherein the processor is configured to: communicate with another apparatus through the interface circuit, and perform the method according to any one of claims 1 to 18.

20. A communication apparatus, comprising a module configured to perform the method according to any one of claims 1 to 18.

21. A communication apparatus, comprising a processor coupled to a memory, wherein the processor is configured to invoke a program stored in the memory, to perform the method according to any one of claims 1 to 18.

22. A communication apparatus, comprising a processor and a memory, wherein the memory is configured to store computer instructions; and when the communication apparatus runs, the processor executes the computer instructions stored in the memory, to perform the method according to any one of claims 1 to 18.

23. A computer-readable storage medium, wherein the storage medium stores a computer program or instructions, and when the computer program or the instructions are executed by a communication apparatus, the method according to any one of claims 1 to 18 is implemented.
